# EUROPEAN PATENT APPLICATION

(11) **EP 1 600 953 A1**
(43) Date of publication of application: **30.11.2005**
(21) Application number: 05011102.0
(22) Date of filing: 23.05.2005
(51) Int. Cl.: G11B 5/70, G11B 5/84, B26D 1/00

(54) **Magnetic tape and method for producing the same**

(30) Priority: 24.05.2004 JP 2004152855
(71) Applicant: FUJI PHOTO FILM CO., LTD., Minami-Ashigara-shi, Kanagawa 250-0123 (JP)
(72) Inventor: Yoshida, Tsuneo, Odawara-shi, Kanagawa (JP); Araki, Hiroaki, Odawara-shi, Kanagawa (JP)
(74) Representative: HOFFMANN EITLE

(57) **Abstract**

A magnetic tape having a magnetic layer which contains at least a ferromagnetic powder and a binding agent on one surface of a support and having a back layer on the other surface, wherein the following conditions of (1) and (2) are satisfied,
(1) a maximum convex degree of the magnetic layer is 1.0µm or lower on a non-restraint side cut surface, and
(2) a total number of particles with the particle size of 1.0µm or larger which adhere to the restraint side cut surface and the non-restraint side cut surface are 100 particles/20mm or lower. The magnetic tape can be produced by a cutting device in which the blade angle of the upper blade forming the non-restraint cut surface of the magnetic tape is 50 to 80°.

## Description

### BACKGROUND OF THE INVENTION

### TECHNICAL FIELD OF THE INVENTION

The present invention relates to a magnetic tape and a method for producing the magnetic tape and, more particularly, relates to a magnetic tape and a method for producing the magnetic tape which is excellent in running durability and capable of remarkably suppressing an increase in dropouts and a decrease in output after repeated FF/REW running.

### DESCRIPTION OF THE RELATED ART

Magnetic recording media have been used for various applications as recording tape, videotape, data-recording tape, etc. Yearly, these are being made available as ever-higher density magnetic recording media and shorter recording wavelengths, while various recording methods have been studied from analog method to digital method.

In particular, magnetic recording media in which a ferromagnetic metal powder mainly containing iron is coated together with a binding agent on a non-magnetic support have been used mainly as visual data recording media for commercial use due to excellent cost performance. High electromagnetic conversion characteristics are required for these magnetic recording media for recording visual data for commercial use, and recorded images and data are marketable products, therefore, running durability is required that can withstand severe use under various environmental conditions compared with those for general consumers. To be more specific, required running durability includes suppression of dropout (DO), clogging and decreased output.

For the purpose of decreasing the number of DO, a magnetic recording medium has been disclosed in JP-A-8-279148, in which a volume per 0.03mm of the magnetic layer part projected from the apex of the maximum convex part of a non-magnetic support is greater than 0 but less than 100µm³ or the number of cracks at the edge of a magnetic layer is 0 to 100 cracks/mm.

For the purpose of improving the reliability of electromagnetic conversion characteristics, DO, and durability and also raising productivity, a magnetic recording medium has been disclosed in JP-A-2000-207732, which is not projected from the lowest end of a lower non-magnetic layer.

When a magnetic tape runs on VTR etc., the majority of VTRs, etc., restrict the edge of magnetic tape, by which the edge is always running in contact with the restriction guide. Such restriction is responsible for an increase in the number of DO or a marked decrease in output at the turn-back point before and after the running of the magnetic tape, particularly when a durability running test is conducted by repeating FF/REW running. This guide restriction has become increasingly severe due to the recent remarkable improvement in recording density. Therefore, a magnetic tape is now required, which has excellent running durability under a severe guide restriction.

### SUMMARY OF THE INVENTION

An object of the present invention is to provide a magnetic tape which is excellent in running durability and capable of markedly suppressing an increase in the number of dropouts and a decrease in output even after repeated FF/REW running and a method for producing the same.

As a result of a diligent examination, it was found that when magnetic tapes are produced by cutting an wide raw film of magnetic tape by use of a cutting device mainly having an upper blade and a lower blade, fine particles (slit dust) adhere to the cut surface of the thus obtained magnetic tape and the fine particles move to the surface of the magnetic tape due to the guide restriction, which results in an increase in the number of DO, a decrease in output, etc. A more detailed examination also found that slit dust adhered to the non-restraint side cut surface (also called upper blade surface) during cutting heavily adheres to the cut surface of the magnetic tape again. Further, when the maximum convex degree of the magnetic layer on the non-restraint side cut surface was great, the tape was damaged by a touch roller when reeled after cutting and consequently fine particles were found to more heavily adhere to the cross section of the magnetic tape.

To be specific, the present invention can be described as follows.
1. A magnetic tape having a magnetic layer which contains at least a ferromagnetic powder and a binding agent on one surface of a support and having a back layer on the other surface, wherein the following conditions of (1) and (2) are satisfied,
   (1) a maximum convex degree of the magnetic layer on a non-restraint side cut surface is 1.0µm or lower, and
   (2) a total number of particles with particle sizes of 1.0µm or larger which adhere to the restraint side cut surface and the non-restraint side cut surface is 100 particles/20mm or lower.
2. A method for producing a plurality of narrow magnetic tapes by cutting wide raw film of magnetic tape by use of a cutting device having an upper blade and a lower blade according to the above 1, wherein a blade angle of the upper blade forming the non-restrained cut surface of the magnetic tape is 50 to 80°.

The present invention can provide a magnetic tape which is excellent in running durability and capable of remarkably suppressing an increase in the number of dropouts and a decrease in output even after repeated FF/REW running and a method for producing the magnetic tape. Further, in order to remove adherence of fine particles, it can be considered that a tape after a slit is allowed to come into contact with a cleaning tissue, thereby reducing the amount of adhering particles. However, it is impossible to sufficiently remove fine particles adhering to the cut surface of a magnetic tape, and there is a problem in increasing the production cost. Accordingly, even if using a cleaning tissue, it is impossible to attain the object of the present invention.

### BRIEF DESCRIPTION OF THE DRAWINGS

FIG.1 shows a cross section of the cut part of the cutting device, which is viewed so that the machine direction of the wide raw film of magnetic tape is in the vertical direction on the paper surface.
FIG.2 is a cross sectional view of the magnetic tape illustrating the maximum convex degree of the magnetic layer according to the present invention.
FIG.3 is a cross sectional view of the upper blade illustrating the blade angle according to the present invention.
FIG. 4 is a view illustrating one example of the cutting device used in the present invention.

### DETAILED DESCRIPTION OF THE INVENTION

In the present invention, a restraint side cut surface is a surface of the side where an wide raw film of magnetic tape is restricted by the lower blade and cut by the upper blade, whereas a non-restraint side cut surface is a surface opposite the restraint side cut surface and a surface of the side where a wide raw film of magnetic tape is not restrained by the lower blade and cut by the upper blade.

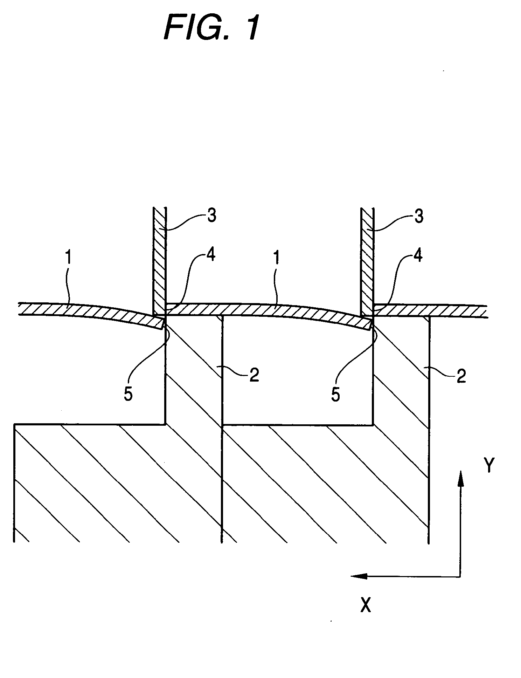

An additional description will be made with reference to FIG.1. FIG.1 is a cross section of a cut part of the cutting device which is viewed so that the machine direction of the wide raw film of magnetic tape is in the vertical direction on the paper surface.

X denotes the width direction of an wide raw film of magnetic tape, and Y denotes the thickness direction of an wide raw film of magnetic tape.

The restraint side cut surface 4 is a surface of the side where the original magnetic tape 1 is restrained by the lower blade 2 and cut by the upperblade 3. It is a cut surface restrained in the direction of Y.

The non-restraint side cut surface 5 is a surface opposite the restraint side cut surface, and a surface of the side where the original magnetic tape 1 is not restrained by the lower blade 2 and cut by the upper blade 3. it is a cut surface not restrained in the direction of Y.

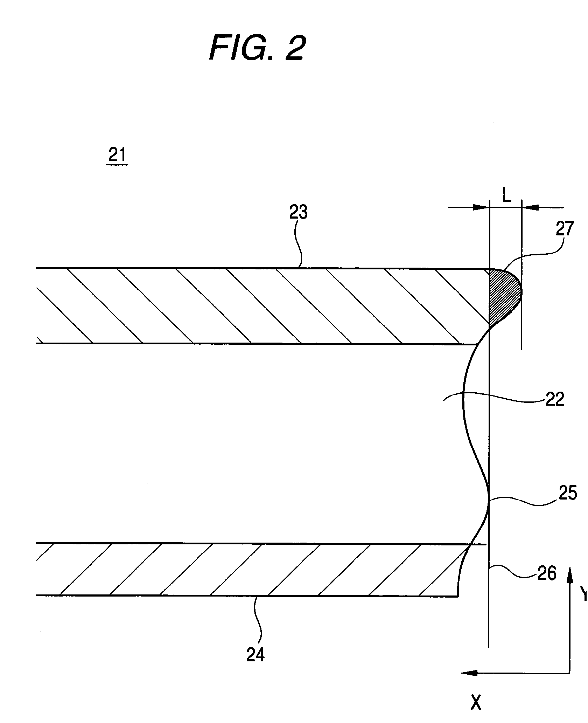

FIG.2 is a cross sectional view of the magnetic tape for illustrating a maximum convex degree of the magnetic layer according to the present invention. In FIG.2, the magnetic tape 21 of the present invention has a magnetic layer 23 which contains at least a ferromagnetic powder and a binding agent on one surface of a support 22 and a back layer 24 on the other surface. When an wide raw film of magnetic tape is slit along the machine direction and a line 26 is drawn vertically to the width direction of a magnetic tape from the apex of a maximum convex part 25 of a support 22 on the non-restraint side cut surface, a maximum convex degree of the magnetic layer is a length L in the width direction of the magnetic tape which is the degree of the magnetic layer part 27 projected from the maximum convex part 24 divided by this line 26. Further, the maximum convex part 25 of the support 22 is the furthest end of a part which contacts with the end line of the cut end when a line vertical to the width direction of the magnetic tape is scanned with respect to the end line of the cut end obtained by projecting so that the cut surface of the magnetic tape 21 is vertical to the paper surface.

A magnetic tape of the present invention must meet the following conditions of (1) and (2),
(1) a maximum convex degree of the magnetic layer on a non-restraint side cut surface is 1.0µm or lower, and
(2) a total number of particles with the particle sizes of 1.0µm or larger which adheres to the restraint side cut surface and the non-restraint side cut surface is 100 particles/20mm or lower.

In the condition (1), when the maximum convex degree of the magnetic layer exceeds 1.0µm, particles with a particle size of 1.0µm or greater heavily adhere to the cut surface of a magnetic tape, which is not favorable. Thus, it is favorable that the maximum convex degree of the magnetic layer is 0 to 0.5µm.

Further, the maximum convex degree of the magnetic layer can be measured simply by using a commercially available microscope, for example, by a laser microscope made by JEOL Ltd.

In the condition (2), the total of adhering particles exceeds 100 for each 20mm in the length direction of a magnetic tape, which results in an increase in the number of dropouts and a decrease in output, thereby making it impossible to attain the object of the present invention. It is preferable that the number of adhering particles is 50 particles/20mm or lower. In the present invention, the total number of adhering particles is made to be 100/20mm or lower, by which an increase in the number of dropouts can be markedly suppresseddue to repetition of FF/REW running, in particular.

The number of adhering particles can be counted through photography by a scanning electron microscope (SEM). A preferable photographic magnification is 1000 to 2000 times. Where there is a concern when adhering particles vary in the density presence depending on sites, it is preferable that the site is randomly selected for one sample to observe at least a 20mm-long field in the length direction of a magnetic tape, by which adhering particles are counted and the mean value is calculated. In addition, the thus photographed adhering particles can be analyzed for composition by conducting analysis by EPMA (Electron Probe X-ray Micro Analyzer) at the same time with SEM photography.

In order to provide a magnetic tape that can meet the above-described conditions of (1) and (2), it is necessary to establish a blade angle of the upper blade forming the non-restraint side cut surface of the magnetic tape at 50 to 80°, as one embodiment.

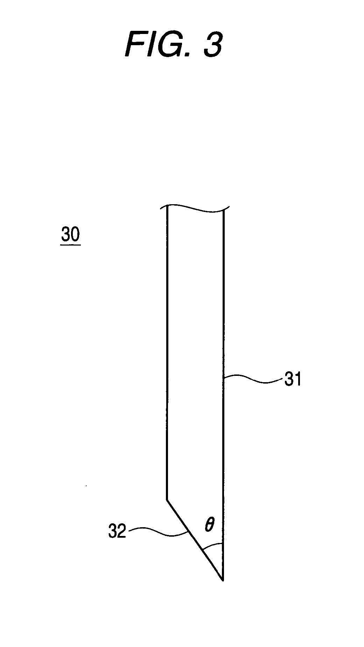

FIG.3 is a cross sectional view of the upper blade for explaining the angle of the blade in the present invention. The upper blade 30 used in the present invention is, for example, a linear flat plate-like single-edged cutting tool equipped with an edge back surface 31 forming the restraint side cut surface of the magnetic tape and a blade surface 32 forming the non-restraint side cut surface, and the blade angle θ described in the present invention is an angle formed by the edge back surface 31 and the blade surface 32.

Keeping the blade angle θ at 80° or lower makes it possible to suppress the maximum convex degree of the magnetic layer at 1.0µm or lower and reduce the number of adhering particles. Further, making the blade angle θ even at less than 50° can suppress the maximum convex degree of the magnetic layer at 1.0µm or lower . However, when an wide raw film of magnetic tape is slit, the magnetic layer rises toward the upper blade, thereby causing unstable reeling of cut tapes (greater bounce on a touch roller) which is not favorable for commercial use. A preferable blade angle θ is 60 to 80°.

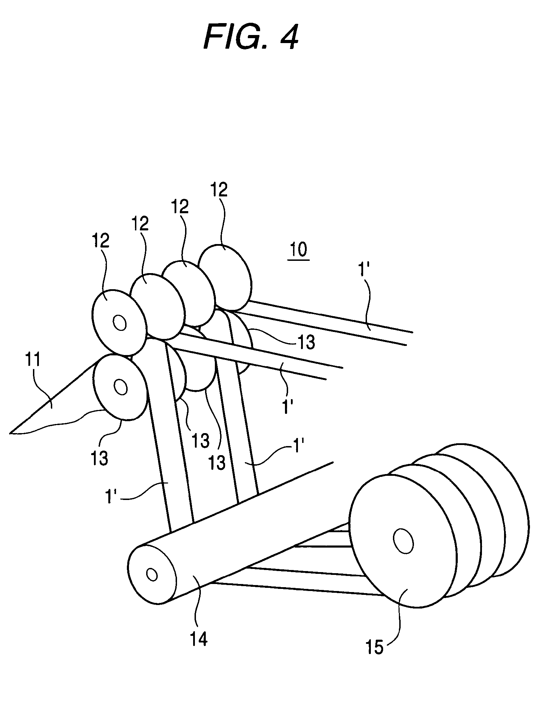

A cutting device used in the present invention shall not be particularly restricted, and may be a device as long as it can cut a wide raw film of magnetic tape by an upper blade and a lower blade to produce a plurality of narrow magnetic tapes having a predetermined width. For example, as shown in FIG.4, a device 10 dealing with the raw film 11 of magnetic tapes in which many upper blades 12 and many lower blades 13 are faced to each other, and the thus obtained magnetic tape 1' is reeled up through a guide roller 14 while being pressed to the outer circumferential surface of a hub 15 by a touch roller (not illustrated).

Conditions of slitting include slit speed, mating depth, blade strike, peripheral speed ratio of upper blade to lower blade (peripheral speed of upper blade with respect to that of lower blade), continuous use time of slit blades, etc.

It is preferable that the slit speed is faster, to be more specific, in the range of 150 to 400m/minute, preferably 250 to 350m/minute, and more preferably 280 to 330m/minute. A preferable mating depth is 0.25 to 0.7mm and a more preferable mating depth depends on combination of other slit conditions. A preferable blade strike is 40 to 120µm.

A preferable peripheral speed ratio of the upper blade to the lower blade is, to be more specific, 1.00 to 1.05, and a more preferable speed depends on combination with other slit conditions, as with the above-described mating depth.

A magnetic tape of the present invention is obtained by slitting an wide raw film of magnetic tape along the machine direction, and the entire thickness is generally 3 to 20µm, preferably 4 to 10µm for mass production, and more preferably 4 to 8µm. A description will be made about the constituent elements of the magnetic tape of the present invention.

Supports that can be used in the present invention include a polyethylene naphtalate (PEN), a polyethylene terephthalate (PET), a polyamide, polyimide, a polyamide-imide, an aromatic polyamide and a polybenzoxazole produced by biaxial orientation. These supports may include those previously treated by corona discharge, plasma polymerization, simple adhesion or heating. Further, supports usable in the present invention are preferably provided with a center line average surface roughness 0.1 to 20nm, with the cutoff value of 0.25mm, or 1 to 10nm as a preferable range, and also provided with an excellent surface smoothness. In addition, it is preferable that the supports are not only small in center line average surface roughness but also free from bulky projections exceeding 1µ. These supports are 4 to 15µm in thickness and preferably 4 to 9µm. Where it is thin, the irregularity of the back layer is easily reflected due to tension during handling, and use of a high-Tg polyurethane resin in a magnetic layer makes it possible to effectively prevent such reflection***1). Where the supports are 7µm or lower in thickness, it is preferable to use aromatic polyamides such as PEN and aramid.

Further, the magnetic tape of the present invention can be provided with a non-magnetic layer between a support and a magnetic layer. The non-magnetic layer is a substantially non-magnetic layer containing a non-magnetic power and a binding agent. The non-magnetic layer must be substantially non-magnetic so as not to affect the electromagnetic conversion characteristics of the magnetic layer thereon, but do not pose any particular problem, if it contains a magnetic powder in such a small amount which does not affect the electromagnetic conversion characteristics of the magnetic layer. The non-magnetic layer usually contains a lubricant, in addition to these compositions.

Non-magnetic powders that can be used in the non-magnetic layer include non-magnetic inorganic powders and carbon blacks, for example. Of non-magnetic inorganic powders, those which are relatively hard are preferable and those with Mohs hardness exceeding 5 are preferable (more preferably 6 or more). Non-magnetic inorganic powders include, for example, an α-alumina, a β-alumina, a γ-alumina, a silicon carbide, a chromic oxide, a serium oxide, an α-ferric oxide, a corundum, a silicon nitride, a titanium carbide, a titanium dioxide, a silicon dioxide, a boron nitride, a zinc oxide, a calcium carbonate, a calcium sulfate and a barium sulfate. These may be used solely or in combination. Of these powders, a titanium oxide, an α-alumina, an α-ferric oxide or a chromic oxide is preferable. A preferable mean particle size of the non-magnetic inorganic powder is 0.01 to 1.0µm (more preferably 0.01 to 0.5µm and particularly preferably 0.02 to 0.1µm) Further, preferable non-magnetic powders are those in which 3 to 25% by weight (preferably 3 to 20% by weight) is a composition which is 5 or higher in Mohs hardness (more preferably 6 or higher in Mohs hardness), namely those that can be used as an abrasive.

Carbon black used in the non-magnetic layer is added to non-magnetic inorganic powders for the purpose of imparting an electric conductivity to the magnetic layer to prevent the electric charge and also securing the surface smoothness of the magnetic layer formed on the non-magnetic layer. The carbon black usable in the non-magnetic layer is preferably 35nm or lower in mean particle size (more preferably 10 to 35nm). It is also preferable that the carbon black is 5 to 500 m²/g in specific surface area (more preferably 50 to 300m²/g). A preferable DBP absorbing quantity is 10 to 1000mL/100g (more preferably 50 to 300mL/100g). Further, it is preferable that pH is 2 to 10, the moisture content is 0.1 to 10% and the tape density is 0.1 to 1g/cc.

Carbon blacks produced by various methods are usable in the present invention and include a furnace black, a thermal black, an acetylene black, a channel black and a lamp black. Commercially available carbon blacks include, for example, Black Pearls 2000, 1300, 1000, 900, 800, 700 and Vulcan XC-72 (made by Cabot Corporation) ; #35, #50, #55, #60 and #80 (made by Asahi Carbon Co., Ltd.); #3950B, #3750B, #3250B, #2400B, #2300B, #1000, #900, #40, #30 and #10B (made by Mitsubishi Chemical Corporation); Conductex SC, Raven, 150, 50, 40, 15 (made by Columbia Carbon); Ketjen black EC, Ketjen black ECDJ-500 and Ketjen black ECDJ-600 (made by Lion Akzo Co. Ltd.).

Carbon black is usually added to the non-magnetic layer at 3 to 25 parts by weight with respect to 100 parts by weight of all non-magnetic inorganic powders, preferably at 4 to 20 parts by weight and more preferably at 5 to 15 parts by weight.

Binding agents usable in the non-magnetic layer include, for example, thermoplastic resins, thermosetting resins, reactive resins or their mixtures. Thermoplastic resins include, for example, a vinyl chloride, a vinyl acetate, a vinyl alcohol, a maleic acid, an acrylic acid, an acrylic ester, a vinylidene chloride, an acrylonitrile, a methacrylic acid, a methacrylic acid ester, a styrene, butadiene, an ethylene, a vinyl butyral, a vinyl acetal, and polymers or copolymers containing a vinyl ether as a constitutional unit. Copolymers include, for example, a vinyl chloride/vinyl acetate copolymer, a vinyl chloride/vinylidene chloride copolymer, a vinyl chloride/acrylonitrile copolymer, an acrylic ester/acrylonitrile copolymer, an acrylic ester/vinylidene chloride copolymer, an acrylic ester/styrene copolymer, a metaacrylic ester/acrylonitrile copolymer, a metaacrylic ester/vinylidene chloride copolymer, a metaacrylic ester/styrene copolymer, a vinylidene chloride/acrylonitrile copolymer, a butadiene/acrylonitrile copolymer, a styrene/butadiene copolymer, and a chlorovinyl ether/acrylic ester copolymer.

In addition to the above described binding agents, polyamide resins, cellulose resins (a cellulose acetate butylate, a cellulose diacetate, a cellulose propyonate, a nitrocellulose, etc.), a polyvinyl fluoride, a polyester resin, a polyurethane resin and various rubber-based resins may be used.

Further, thermosetting resins and reactive resins include, for example, a phenol resin, an epoxy resin, a polyurethane thermosetting resin, a urea resin, a melamine resin, an alkyd resin, an acryl reactive resin, a formaldehyde resin, a silicone resin, an epoxy/polyamide resin, a mixture of a polyester resin with a polyisocyanate prepolymer, a mixture of a polyester polyol with a polyisocyanate and a mixture of a polyurethane with a polyisocyanate.

The above-described polyisocyanates include, for example, isocyanates such as a tolylenediisocyanate, a 4,4'-diphenylmethanedi isocyanate, a hexamethylene diisocyanate, an xylylene diisocyanate, a naphthylene-1,5-diisocyanate, an o-toluidine diisocyanate, an isophorone diisocyanate and a triphenylmethane triisocyanate, products of these isocyanates and polyalcohols, and a polyisocyanate produced by condensation of isocyanates.

The above polyurethane resins include known compounds with structures such as a polyester polyurethane, a polyether polyurethane, a polyether polyester polyurethane, a polycarbonate polyurethane, a polyester polycarbonate polyurethane and a polycaprolactone polyurethane.

In the present invention, it is preferable that binding agents usable in the non-magnetic layer are combinations of polyurethane resins with at least one type of resin selected from a vinyl chloride resin, vinyl chloride/vinyl acetatecopolymer, vinyl chloride/vinyl acetate vinyl alcohol copolymer, vinyl chloride/vinyl acetate anhydrous maleic acid copolymer and nitrocellulose, or the combinations to which polyisocyanate is combined as a curing agent.

Preferable binding agents are those for which at least one polar group selected from -COOM, -SO₃M, -OSO₃M, -P=O(OM)₂, -O-P=O(OM)₂ (M represents a hydrogen atom or an alkali metal), -OH, -NR₂, -N+R₃ (R represents a hydrocarbon group), an expoxy group, -SH and -CN is introduced by copolymerization or addition reaction, whenever necessary, for obtaining an improved dispersibility and imparting durability to the thus obtained layer. It is also preferable that the polar group is introduced to the binding agent in a quantity of 10⁻¹ to 10⁻⁸ mol/g (more preferably 10⁻² to 10⁻⁶ mol/g).

A binding agent usable in the non-magnetic layer is usually added in 5 to 50 parts by weight (preferably 10 to 30 parts by weight) with respect to 100 parts by weight of the non-magnetic powder. Further, where a vinyl chloride resin, a polyurethane resin and a polyisocyanate are combined in the non-magnetic layer as a binding agent, it is preferable that the vinyl chloride resin, the polyurethane resin and the polyisocyanate are contained in all binding agents respectively 5 to 70% by weight, 2 to 50% by weight and 2 to 50% by weight.

A lubricant is added to the non-magnetic layer for the purpose of lowering the friction between the magnetic surface and the magnetic head or between the guide pole of the drive and the cylinder and maintaining a smooth sliding condition after it oozes out on the surface of the magnetic layer. The lubricant includes, for example, an aliphatic carboxylic acid such as a fatty acid and a fatty acid ester. The fatty acid includes, for example, an acetic acid, a propionic acid, an octanoic acid, a 2-ethylhexanoate, an lauric acic, a myristic acid, a stearic acid, a palmitic acid, a behenic acid, an arachidic acid, an oleic acid, an linoleic acid, an linolenic acid, an elaidic acid, a palmitoleic acid etc., and their mixtures.

Further, fatty acid esters include, for example, a butylstearate, a sec-butylstearate, an isopropyl stearate, a butyloleate, an amylstearate, a 3-methylbutylstearate, a 2-ethylhexylstearate, a 2-hexyldecile stearate, a butylpalmitate, a 2-ethylene hexylmyristate, a mixture of a butylstearate with a butylpalmitate, an oleyloleate, a butoxyethylstearate, a 2-butoxy-1-propylstearate, an acylated dipropylene glycol monobutyl ether with a stearic acid, a diethyleneglycol dipalmitate, a hexamethylene diol which is acylated with a myristic acid to mede into a diol, and various ester compounds such as oleates of glycerin. These compounds may be used solely or in combination. The lubricant is usually added to the non-magnetic layer in 0.2 to 20 parts by weight with respect to 100 parts by weight of all non-magnetic powders.

A magnetic layer is in principle made up of a ferromagnetic powder and a binding agent. Further, the magnetic layer usually contains a lubricant, an electrically conductive powder (for example, carbon black) and an abrasive. Ferromagnetic powders include, for example, a γ-Fe₂O₃, a Fe₃O₄, a FeOx (x=1.33 to 1.5), a CrO₂, a Co-containing γ-Fe₂O₃, a Co-containing FeOx (x=1.33 to 1.5), a ferromagnetic alloy powder (ferromagnetic metal powder) mainly made up of Fe, Ni or Co (75% or greater) and a plate-form hexagonalferrite powder. In the present invention, it is preferable that a ferromagnetic metal powder or aplate-form hexagonal ferrite powder is used as a ferromagnetic powder. A ferromagnetic metallic powder is particularly preferable.

The above-described ferromagnetic metal powder is preferably 30 to 70m²/g in specific surface area of the particles and 50 to 300 Angstrom in crystallite size determined by X-ray diffraction. Where the specific surface area is excessively small, it is difficult to attain a high-density recording sufficiently, and where it is excessively large, it is difficult to attain a sufficient dispersion and therefore it is impossible to form a smooth and flat surface magnetic layer, thereby resulting in failure in responding to the high-density recording.

The ferromagnetic metal powder must contain at least Fe. To be more specific, it is a single metal or an alloy mainly made up of Fe, Fe-Co, Fe-Ni, Fe-Zn-Ni or Fe-Ni-Co. Further, it may be made of Fe alone. Regarding the magnetic characteristics, the ferromagnetic metal powder is 110emu/g (A· m²/kg) or greater, preferably 120A·m²/kg or more and 170A·m₂/kg or less in saturated magnetizing quantity (σs) for attaining the high recording density. Further, the coercitivity (Hc) is 1450 to 2650 oersted (Oe) (116-212kA/m), preferably 1500 to 2500 Oe (120 to 200kA/m). The mean long-axis length of the powder determined by transmission electronmicroscope is 0.5µm or lower, preferably 0.01 to 0.3µm, and the axial ratio (long axis length to short axis length, aspect ratio is 5 or greater and 20 or lower, preferably 5 to 15. Nonmetals such as B, C, Al, Si and P, their salts or oxides is sometimes added to the composition to further improve the characteristics. In general, an oxide layer is formed to make particle surfaces of these metal powders chemically stable.

The plate-form hexagonal ferrite powder used in the present invention is 25 to 65m²/g in specific surface area, 2 to 15 in plate form ratio (plate diameter to plate thickness) and 0.02 to 1.0µm in mean plate diameter. The plate-form hexagonal ferrite powder has a difficulty in being subjecting to the high-density recording, due to the same reason as the ferromagnetic metal powder, where the particle size is excessively large or small. The plate-form hexagonal ferrite is a flat plate-form ferromagnetic body provided with an easily magnetizing axis in the direction vertical to the flat plate surface, and includes, for example, barium ferrite, strontium ferrite, lead ferrite, calcium ferrite and their derivative substitutions such as cobalt, etc. Of these substances, particularly preferable are a cobalt derivative substitution of barium ferrite and a cobalt derivative substitution of strontium ferrite. Further, elements such In, Zn, Ge, Nb and V may be added, whenevernecessary, totheplate-form hexagonal ferrite for the purpose of improving the characteristics. In addition, regarding the magnetic characteristics, the plate-form hexagonal ferrite powder must be of a particle size as described above and also at least 50A· m²/kg or greater, and preferably 53A·m²/kg or greater in saturated magnetizing quantity (σs) for the purpose of attaining the high-density recording. It is also 700 to 2000 Oe (56 to 160kA/m) in coercitivity, and preferably in the range 900 to 1600 Oe (from 72 to 128kA/m).

It is preferable that the ferromagnetic powder contains moisture 0.01 to 2% by weight. It is preferable that the moisture content is optimized in accordance with types of binding agents. It is also preferable that the ferromagnetic powder is optimized for pH in accordance with the combination of the binding agent to be used, and the pH is usually 4 to 12 and preferably 5 to 10. Further, it is preferable that the ferromagnetic powder is partially coated on the surface withAl, Si, P or their oxide. In giving the surface treatment, the coating agent is usually added 0.1 to 10% by weight with respect to the ferromagnetic powder. Since thus coated ferromagnetic powder can be suppressed for the absorption of a lubricant such as fatty acid to 100mg/m² or lower, desired effects can be obtained even when the lubricant is added to the magnetic layer in a small quantity. The ferromagnetic powder may contain soluble inorganic ions such as Na, Ca, Fe, Ni, and Sr, but it is preferable that the content of these ions should be kept to the lowest possible extent. The characteristics will not usually be affected where the content is 5000ppm or lower. Further, the above-described ferromagnetic powder and the method for producing the same have been disclosed, for example, in Japanese Unexamined Published Patent Application No. H7-22224.

The ferromagnetic powder used in the present invention is preferably that treated by substances known as a sintering preventing agent such as Al, Si, P, Ti, and rare earth elements (Sc, Y, La, Ce, Pr, Nd, Pm, Sm, Eu, Gd, Tb, Dy, Ho, Er, Tm, Yb and Lu). It is preferable that in the present invention such powder is at least treated with Y (yttrium). The above sintering preventing agent has been disclosed in Japanese Unexamined Published Patent Application No. S52-134858, Japanese Unexamined Published Patent Application No. S56-114833, Japanese Unexamined Published Patent Application No. S57-73105, Japanese Unexamined Published Patent Application No. H6-25702 and Japanese Unexamined Published Patent Application No. H6-36265.

Lubricants described as those usable in the non-magnetic layer may be used. A lubricant is usually added to the magnetic layer 0.2 to 20 parts by weight (preferably 0.25 to 10 parts by weight) with respect to 100 parts by weight of the ferromagnetic powder.

Carbon blacks are added for various purposes such as reducing the surface electric resistance (Rs) of the magnetic layer, reducing the coefficient of dynamic friction (µk value), improving the running durability and securing the surface smoothness of the magnetic layer. Carbon blacks as described usable in the non-magnetic layer may be used. However, carbon black used in the magnetic layer is preferably 5nm to 350nm in the mean particle size (more preferably 10nm to 300nm). Carbon blacks may be used in combination of two or more types of those with a different mean particle size. They are usually added 0.1 to 30 parts by weight (preferably 0.2 to 15 parts by weight) with respect to 100 parts by weight of the ferromagnetic powder.

The above-described abrasives include, for example, a fused alumina, a silicon carbide, a chromic oxide (Cr₂O₃), a corundum, a synthetic corundum, a diamond, a synthetic diamond, a garnet, an emery (major constitutions: a corundum and a magnetite). These abrasives are 5 or greater in Mohs hardness (preferably in 6 or greater), and preferably 0.05 to 1µm in the mean particle size (more preferably 0.2 to 0.8µm). These are usually added 3 to 25 parts by weight (preferably 3 to 20 parts by weight) with respect to 100 parts by weight of the ferromagnetic powder.

Binding agents described as those for the non-magnetic layer may be used in the magnetic layer. These binding agents are usually added to the magnetic layer in the range of 5 to 50 parts by weight (preferably 10 to 30 parts by weight) with respect to 100 parts by weight of the ferromagnetic powder. It is preferable that a vinyl chloride resin, a polyurethane resin and a polyisocyanate are combined and added to the magnetic layer as a binding agent. In this instance, it is preferable that the vinyl chloride resin, the polyurethane resin and the polyisocyanate are contained in the respective ranges of 5 to 70% by weight, 2 to 50% by weight and 2 to 50% by weight, respectively, with respect to binding agents.

The back layer is preferably a layer in which carbon blacks and inorganic powders having Mohs hardness of 5 to 9 are dispersed in a binding agent. The thus constituted back layer has been disclosed, for example, in Japanese Published Unexamined Patent Application No. 9-115134 and the back layer of the present invention can also be constituted the same as those. It is preferable to combine two types of carbon blacks different in the mean particle size and, to be more specific, to combine a fine particle-type carbon black with a mean particle size of 10 to 20nm with a coarse particle-type carbon black with a mean particle size of 230 to 300nm. In general, addition of the above fine particle-type carbon black can establish the surface electric resistance of the back layer low and also establish the light transmission low. Many magnetic recording devices often use the light transmission of the tape to send signals. In this instance, addition of a fine particle-type carbon black is particularly effective. Further, a fine particle-type carbon black is in general excellent in suppressing a liquid lubricant, contributing to a reduction in the friction coefficient for a combined use with a lubricant. In contrast, a coarse particle-type carbon black with a particle size of 230 to 300nm functions as a solid lubricant and provides minute projections on the surface of the back layer, thereby reducing the contacting area and contributing to a decrease in the friction coefficient.

Commercially-available fine particle-type carbon blacks include, for example, Raven 2000B (18nm), Raven 1500B (17nm) (made by Columbia Carbon); BP800 (17mm) (made by Cabot Corporation), Printex90 (14nm), Printex95 (15nm), Printex85 (16nm), Printex75 (17nm) (madebyDegussaAG), #3950 (16mm) (made by Mitsubishi Chemical Corporation). Commercially-available coarse particle-type carbon black includes, for example, Thermal Black (270nm) (made by Kankarup Co., Ltd.), Raven MTP(275nm) (made by Columbia Carbon).

Where two types of carbon blacks different in mean particle size are used in the back layer, the content ratio of the fine particle-type carbon black (10 to 20nm) to the coarse particle-type carbon black (230 to 300nm) (weight ratio) is preferably in the range of 98:2 to 75:25 (ratio of the former to the latter), more preferably in the range of 95:5 to 85:15. Further, the content of the carbon black in the back layer (total content) is usually in the range of 30 to 80 parts by weight with respect to 100 parts by weight of the binding agent, and preferably in the range of 45 to 65 parts by weight.

An inorganic powder having Mohs hardness of 5 to 9 is used in order to impart a high running durability to the tape and reinforce the back layer. Further, the inorganic powder having Mohs hardness of 5 to 9 is used to produce an appropriate grinding force on the back layer, thereby reducing the attachment of carbon black to the tape guide pole, etc. The inorganic powder having Mohs hardness of 5 to 9 is preferably 80 to 250nm in mean particle size and more preferably 100 to 210nm.

The inorganic powder having Mohs hardness of 5 to 9 includes, for example, an α-ferric oxide, an α-alumina and a chromic oxide (Cr₂O₃). These powders may be used solely or in combination. Of these powders, the α-ferric oxide and the α-alumina are preferable. The content of the inorganic powder having Mohs hardness of 5 to 9 in the back layer is usually in the range of 3 to 30 parts by weight and preferably in the range of 3 to 20 parts by weight with respect to 100 parts by weight of the carbon black.

A lubricant can be included in the back layer. The lubricant can be used by appropriately selecting lubricants enumerated as those usable in the above-described non-magnetic layer. The lubricant is added to the back layer usually in the range of 1 to 5 parts by weight with respect to 100 parts by weight of the binding agent.

Compounds described as binding agents for the non-magnetic layer may be used as binding agents for the back layer. Preferable are combinations of a nitrocellulose resin, a polyurethane resin, a polyester resin and a polyisocyanate. Where the nitrocellulose resin, the polyurethane resin, the polyester resin and the polyisocyanate are used in combination as a binding agent for the back layer, it is preferable that, in all binding agents, the nitrocellulose resin is contained 40 to 90% by weight (more preferably 55 to 80% by weight), the polyurethane resin is 2 to 30% by weight (more preferably 3 to 10% by weight), the polyester resin is 1 to 20% by weight (more preferably 2 to 5% by weight) and the polyisocyanate is 2 to 50% by weight (more preferably 5 to 30% by weight). The binding agent for the back layer is usually used in the range of 5 to 250 parts by weight (preferably 10 to 200 parts by weight) with respect to 100 parts by weight of the carbon black for the back layer.

A dispersing agent maybe added to a coating liquid for forming each layer of the magnetic tape in order to favorably disperse magnetic powders, non-magnetic powders, etc., in the binding agent. Further, electrically conductive particles (antistatic agent) and anti-fungal agents other than plasticizers and carbon blacks may be added to each layer, whenever necessary. The dispersing agent includes, for example, fatty acids with the carbon number of 12 to 18 (RCOOH, R represents an alkyl group or an alkenyl group with the carbon number of 11 to 17) such as a caprylic acid, a capric acid, a lauric acic, a myristic acid, a palmitic acid, a stearic acid, behenic acid, an oleic acid, an elaidic acid, a linoleic acid, a linolenic acid, and a stearol acid, metal soaps consisting of alkali metals of the above fatty acids or alkaline earthmetals, fluorinated compounds of the above fatty acid esters, amides of the above fatty acids, polyalkyleneoxide alkylphospahe ester, lecithin, trialkylpolyolefinoxy quaternary ammonium salt (alkyl with the carbon number of 1 to 5, olefins include ethylene and propylene), a sulfate, and a copper phthalocyanine. These maybe used solely or in combination. It is preferable that an oleic acid copper, a copper phthalocyanine and a barium sulfate may be used in combination particularly in the back layer. The dispersing agent is added to each layer in the range of 0.5 to 20 parts by weight with respect to 100 parts by weight of the binding agent.

Next, a description will be made for a method for producing a magnetic tape of the present invention. The method for producing the magnetic tape of the present invention comprises a step of forming a non-magnetic layer and a magnetic layer on one surface of a wide and long support and also forming a back layer on the other surface sequentially according to an ordinary method and a step of cutting the thus obtained wide raw film of magnetic tape at a predetermined width. Further, various ordinary treatments such.as drying, orientation, calendering and rolling are appropriately conducted during the above steps or before or after the steps.

It is preferable that a magnetic layer of the magnetic tape in the present invention is provided on a non-magnetic layer while the non-magnetic layer is still wet. To be more specific, it is preferable that the magnetic layer is formed by a coating method, so called wet-on-wet process wherein a magnetic layer-coating solution is applied thereon while a coated layer (non-magnetic layer) formed after a non-magnetic layer coating solution is coated is still wet.

Coating methods according to the above-described wet-on-wet process include the following.
(1) A method by which a device for gravure coating, roll coating, blade coating, or extrusion coating is used to at first form a non-magnetic layer on a support, and a support pressure-type extrusion coating device is used to form a magnetic layer while the non-magnetic layer is still wet (refer to Japanese Published Unexamined Patent Application No. S60-238179, Japanese Published Unexamined Patent Application No. H1-46186 and Japanese Published Unexamined Patent Application No. H2-265672).
(2) A method by which a coating device having a single-coating head equipped with two coating solution slits is used to form a magnetic layer and a non-magnetic layer on a support substantially at the same time (refer to Japanese Published Unexamined Patent Application No. S63-88080, Japanese Published Unexamined Patent Application No. H2-17921 and Japanese Published Unexamined Patent Application No. H2-265672).
(3) A method by which an extrusion coating device with a back-up roller is used to provide a magnetic layer and a non-magnetic layer on a support substantially at the same time (refer to Japanese Published Unexamined Patent Application No. H2-174965). It is preferable that the non-magnetic layer and the magnetic layer are provided by using a simultaneous multiple-layer coating method in the present invention.

The thus produced raw film for magnetic tapes is preferably cut at a predetermined width according to the slit method disclosed in Japanese Published Unexamined Patent Application No. H9-153212 and by the cutting device (described in FIG.4).

### EXAMPLE

Hereinafter, a description will be made about the present invention with reference to examples and comparative examples, but the present invention shall not be restricted to these examples. The part given in the examples is the part by weight.

### Preparation of coating solution for magnetic layer

One hundredparts of the following ferromagnetic metal powder A was ground for 10 minutes by an open kneader, and 2 parts of a carbon black (mean particle size of 80nm), 10 parts of a vinyl chloride resin (made by Zeon Corporation, MR-110), 6 parts of the following polyurethane B (solid basis) and 60 parts of methyl ethyl ketone/ cyclohexanone (weight ratio = 1/1) were then added thereto and kneaded for 60 minutes.

Two hundred parts of methyl ethyl ketone/cyclohexanone (weight ratio = 1/1) was added to the mixture over 6 hours, with the open kneader kept running. Then, 20 parts of the following abrasive dispersion D-1 and 5 parts of abrasive dispersion E-1 were added and dispersed for 120 minutes by a sand grinder. Further, 4 parts of a polyisocyanate (dry solid basis) (made by Nippon Polyurethane Industry Co., Ltd. Coronet 3041), 1 part of a stearic acid, 1 part of a sec-butylstearate, 0.2 parts of a stearic acid amide and 50 parts of a toluene were added and mixed for 20 minutes with agitation. Thereafter, a filter with mean pore size of 1µm was used to effect filtration and prepare a coating agent for the magnetic layer.

### Ferromagnetic metal powder A

Long axis length = 0.15µm, aspect ratio = 9, crystalline size = 17nm, specific surface area = 47m²/g, Co/Fe = 3.7at%, Al/(Co+Fe) = 9.5at%, Hc=15500e (124kA/m) and σS = 132 emu/g (132A· m²/kg).

### Polyurethane B

Composition: polypropylene glycol (molcular weight 2000, Tg -75°C) 0.023 mol, polyesterpolyol (having mol ratio of isophthalic acid : neopentyl glycol: ethyleneglycol of 5 : 5 : 0.1, molcular weight of 2000 and Tg 55°C) 0.023 mol, neopentyl glycol (as chain-extending agent) 0.06mol, ethylene oxide-added substance of sulfoisophthalic acid 0.009 mol, and MD 10, 1 mol
Weight average molecular weight =35000
Tg = 62, -17°C

### Abrasive dispersion D-1

One hundred parts of an α-Al₂O₃ (made by Sumitomo Chemical Co., Ltd., HIT-50, mean particle size of 0.2/µm, free of particles exceeding 0.3µm), 10 parts of vinyl chloride resin (made by Zeon Corporation, MR-110) and 90 parts of a mixing agent of methyl ethyl ketone/cyclohexanone (ratio of 5 : 5) were placed into azirconiumdioxide (ZrO₂) coatedvessel and subj ected to one-hour dispersion by using a bead mill (1.5mm- across zirconium dioxide-made beads).

### Abrasive dispersion E-1

One hundred parts of a Cr₂O₃ (made by Nippon Chemical Co., Ltd. G-5, mean particle size of 0.33µm, percentage of particles exceeding 0.43µm =18%), 10 parts of a vinyl chloride resin (made by Zeon Corporation, MR-110) and 90 parts of a mixing agent of methyl ethyl ketone and cyclohexanone (ratio of 5: 5) were mixed for 10 minutes by air dispersion, then placed in a zirconium dioxide (ZrO₂) coated vessel and subjected to one-hour dispersion byusingabeadmill (1.5mm across zirconium dioxide-made beads).

The thus obtained coating agent for the magnetic layer was coatedon the surface of an 11µm-thick polyethylene terephthalate support by using an extrusion-type coating head so as to give a thickness of 3µm after drying, subjected to magnetic field orientation by using a 3000 Gauss (300mT) magnet while the coating agent for the magnetic layer is not yet dried, and then dried. Further, the following coating agent for the back layer is coated and dried so as to give a thickness of 0.5µm after drying. Thereafter, these coated layers were subjected to a 5-stage calendering by using a metal roll combined with a heat-resistant plastic roll (speed, 200m/minute; linear pressure, 300kg/cm; temperature, 85°C). The thus obtained roll was subjected to thermo-treatment at 65°C for 24 hours.

The thus obtained raw film for magnetic tapes was slit to a width of 1/2 inch by using an upper blade and a lower blade having the blade angle shown in Table 1 and 2 at the slit speed shown in Table 1 and 2. Further, the thus slit magnetic tapes were subjected to braiding and cleaning by using an abrasive tape (made by Fuji Photo Film Co., Ltd., MS-20000) at the feeding tension of 40g/1/2 inch width to obtain the magnetic tape.

| (Coating agent for back layer) | |
|---|---|
| Carbon black (particle size 18nm) | 100 parts |
| Nitrocellulose (made by Asahi Kasei Corporation, HIG 1/2) | 60 parts |
| Polyurethane (made by Nippon Polyurethane Industry Co., Ltd., N-2301) | 60 parts |
| Polyisocyanate (made by Nippon Polyurethane Industry Co., Ltd., Coronet L) | 20 parts |
| Methyl ethyl ketone | 1000 parts |
| Toluene | 1000 parts |

The thus obtained magnetic tape was checked for the maximum convex degree of the magnetic layer on the non-restraint side cut surface and the number of adhering particles on the restraint side cut surface and the non-restraint side cut surface. The tape was also checked for the number of dropouts and decreased output. Further, the tape was checked for the rising on the non-restraint side cut surface. The results are shown in Table 1 and 2, together with other slit conditions.

The maximum convex degree of the magnetic layer was measured by using a laser microscope (made by JEOL Ltd.).

The number of adhering particles was counted based on a photograph taken under magnification of 1000 to 2000 times by using a scanning electric microscope (SEM). Determination was made at 4 sites (n=4) to count the mean number of adhering particles.

The running durability was tested, more particularly, a Sony-made β cam SP-VTR (BVW-75 model) was used at a temperature of 20°C and RH of 50% to test a 670m-long tape, namely, the tape portion obtained 5th part running to 85th part running was reciprocated 100 times by the mode of FF/REW running to determine the number of dropouts at the drifted site at the time of 5th part and at the time of 85th part as well as the level of decreased output. In Table 1 and 2, ⓞ denotes 0.5dB or lower in decreased output, ○ denotes 0.6 to 1.0 dB, Δ denotes 1.1 to 2.0dB and x denotes 2.1dB or greater.

In determination of the rising on the non-restraint side cut surface, ○ denotes that a tape slit 4500 to 8000m is reeled up by a reel hub of 4.5 inch in the outer diameter, without any abnormal appearance such as radiation on the surface, x denotes that the tape can not be reeled up due to the rising at the length of 4500m or more, or if the tape is reeled up, a part or a whole of the tape is not commercially available due to the development of radiation, etc.

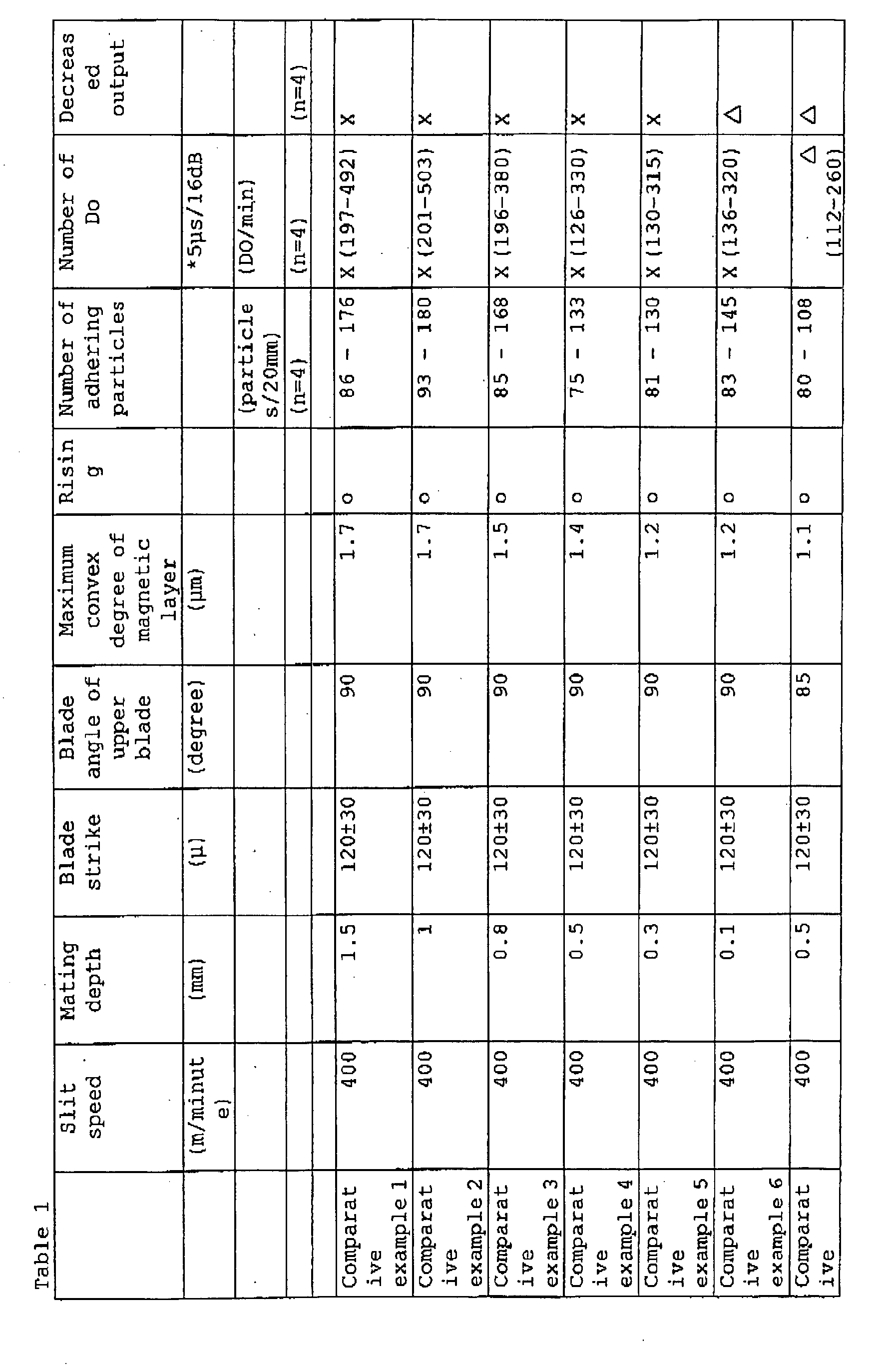

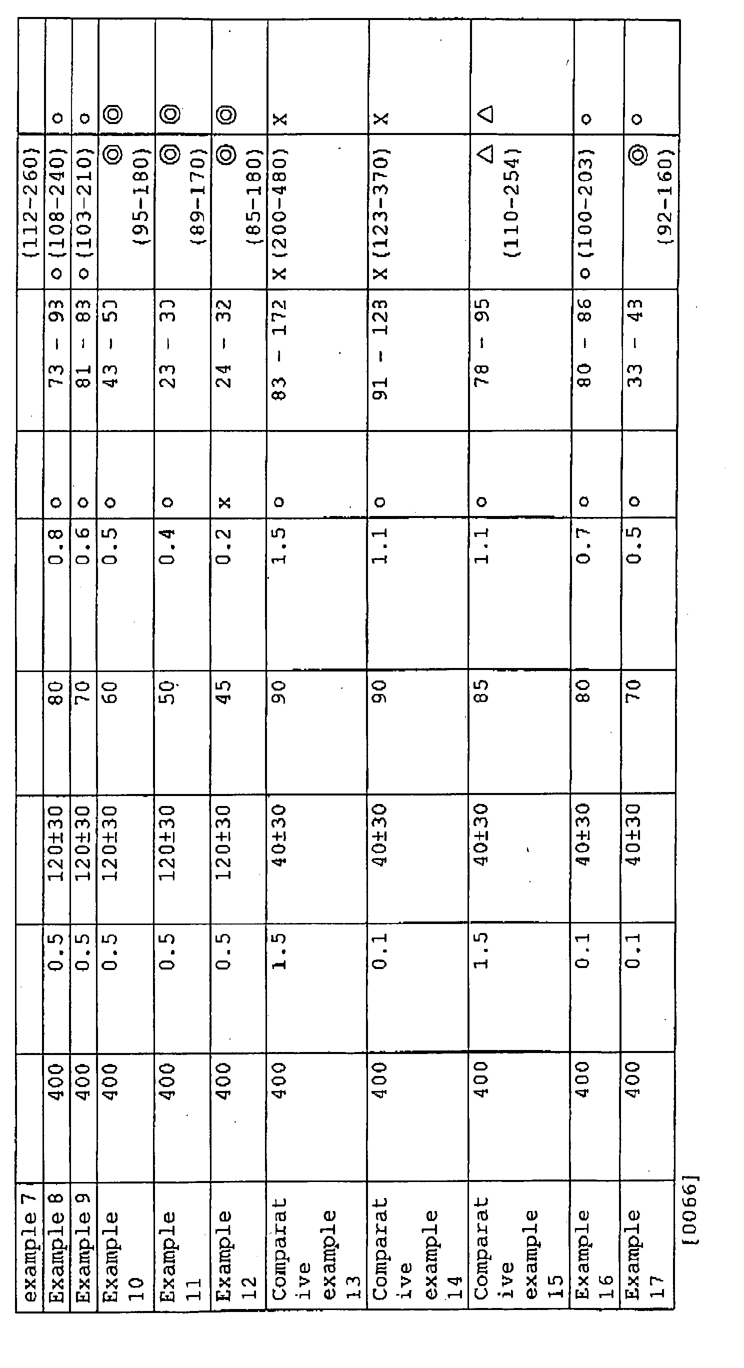

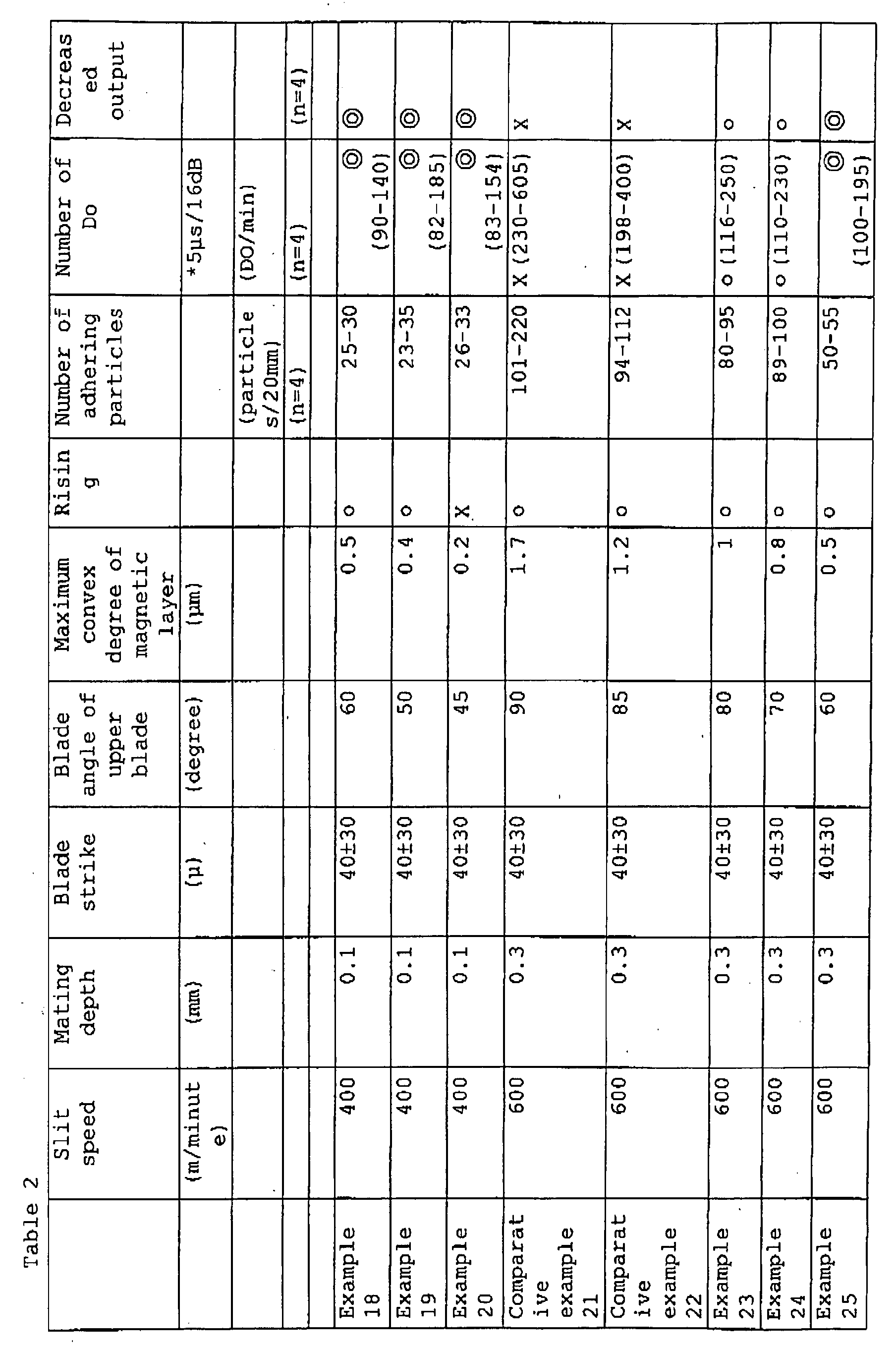

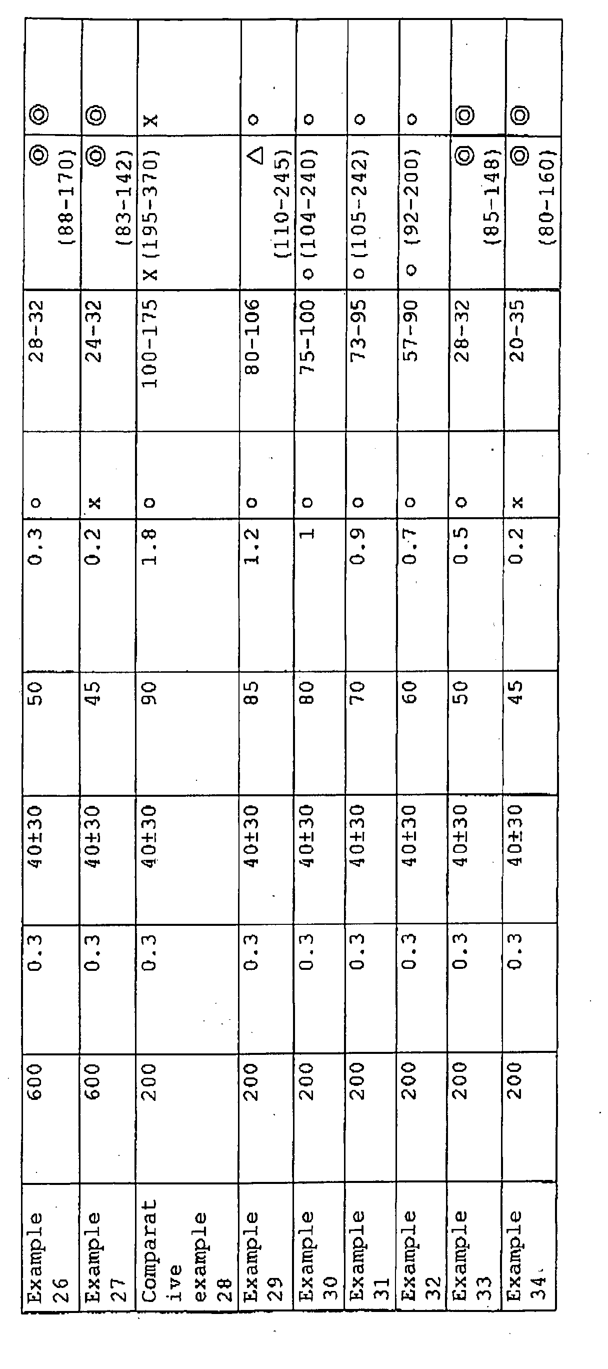

According to the results of Tables 1 and 2, a magnetic tape having the maximum convex degree of the magnetic layer on the non-restraint side cut surface of 1.0µm or lower and a total number of adhering particles of 100 particles/20mm or lower exerted an excellent running durability.

This application is based on Japanese Patent application JP 2004-152855, filed May 24, 2004, the entire content of which is hereby incorporated by reference. This claim for priority benefit is being filed concurrently with the filing of this application.

## Claims

1. A magnetic tape comprising: a support; a magnetic layer which contains at least a ferromagnetic powder and a binding agent on one surface of the support; and a back layer on an other surface of the support,
wherein the magnetic tape satisfies the following conditions of (1) and (2),
(1) a maximum convex degree of the magnetic layer on a non-restraint side cut surface is 1.0µm or lower, and
(2) a total number of particles with particle sizes of 1.0µm or larger which adhere to a restraint side cut surface and the non-restraint side cut surface is 100 particles/20mm or lower.

2. The magnetic tape according to claim 1, wherein a maximum convex degree of the magnetic layer on a non-restraint side cut surface is 0.5µm or lower.

3. The magnetic tape according to claim 1, wherein a total number of particles with particle sizes of 1.0µm or larger which adhere to a restraint side cut surface and the non-restraint side cut surface is 50 particles/20mm or lower

4. The magnetic tape according to claim 1, which further comprises a non-magnetic layer between the support and the magnetic layer.

5. The magnetic tape according to claim 1, wherein the back layer comprises a binding agent, a carbon black and an inorganic powder having Mohs hardness of 5 to 9.

6. A method for producing the magnetic tape according to claim 1, comprising a step of cutting a magnetic tape raw film by use of a cutting device having an upper blade and a lower blade,
wherein a blade angle of the upper blade forming the non-restrained cut surface of the magnetic tape is 50 to 80°.

7. The method according to claim 6, wherein a blade angle of the upper blade forming the non-restrained cut surface of the magnetic tape is 60 to 80°

8. The method according to claim 6, wherein a slit speed of the magnetic tape raw film is 150 to 400m/minute.

9. The method according to claim 6, wherein a slit speed of the magnetic tape raw film is 250 to 350m/minute.

10. The method according to claim 6, wherein a slit speed of the magnetic tape raw film is 280 to 330m/minute.

11. The method according to claim 6, wherein a mating depth is 0.25 to 0.7mm.

12. The method according to claim 6, wherein a blade strike is 40 to 120µm.

13. The method according to claim 6, wherein a peripheral speed ratio of the upper blade to the lower blade is 1.00 to 1.05.
